**Europäisches Patentamt**

**European Patent Office**

**Office européen des brevets**

(19)

(11) Veröffentlichungsnummer : **0 284 597 B1**

## (12) EUROPÄISCHE PATENTSCHRIFT

(45) Veröffentlichungstag der Patentschrift :
**05.06.91 Patentblatt 91/23**

(51) Int. Cl.$^5$ : **B60B 29/00**

(21) Anmeldenummer : **88890065.1**

(22) Anmeldetag : **21.03.88**

(54) **Vorrichtung zum Montieren von Scheibenrädern an Kraftfahrzeugen.**

(30) Priorität : **23.03.87 AT 683/87**

(43) Veröffentlichungstag der Anmeldung :
**28.09.88 Patentblatt 88/39**

(45) Bekanntmachung des Hinweises auf die
Patenterteilung :
**05.06.91 Patentblatt 91/23**

(84) Benannte Vertragsstaaten :
**BE CH DE ES FR GB IT LI NL SE**

(56) Entgegenhaltungen :
**DE-B- 1 061 206**

(56) Entgegenhaltungen :
**DE-B- 1 296 031**
**FR-A- 663 589**
**GB-A- 2 146 958**
**US-A- 1 969 233**

(73) Patentinhaber : **Fleischanderl, Robert**
**Atschreithstrasse 4**
**A-3340 Waidhofen an der Ybbs (AT)**

(72) Erfinder : **Fleischanderl, Robert**
**Atschreithstrasse 4**
**A-3340 Waidhofen an der Ybbs (AT)**

(74) Vertreter : **Wolfram, Gustav, Dipl.-Ing.**
**Schwindgasse 7 P.O. Box 205**
**A-1041 Wien (AT)**

EP 0 284 597 B1

## Beschreibung

Die Erfindung betrifft eine Vorrichtung zum Montieren von Scheibenrädern an Kraftfahrzeugen, mit mindestens einer über einen Radbolzen schiebbaren Hülse, wobei am freien Ende der Hülse ein Montierhebel schwenkbar ansetzbar ist.

Aus der AT-B-184.836 ist eine Vorrichtung dieser Art bekannt. Diese Vorrichtung weist jedoch den Nachteil auf, daß für verschiedene Radbolzendurchmesser jeweils eigene Hülsen vorhanden sein müssen.

Die FR-A-6 635 589 zeigt bereits eine Vorrichtung gemäß dem oberbegriff des Anspruchs 1.

Die Erfindung bezweckt die Vermeidung (des. o.g.) Nachteiles und stellt sich die Aufgabe, eine Vorrichtung der gattungsgemäßen Art zu schaffen, die zum Schutz des Gewindes der Radbolzen dient und die in einfacher Weise an verschiedene Radbolzendurchmesser angepaßt werden kann.

Diese Aufgabe wird erfindungsgemäß durch die Kombination der Merkmale des Anspruchs 1 gelöst.

.Zweckmäßig weist die Hülse zur Abstützung des Einsatzes innen einen mit dem lösbaren Einsatz in Kontakt gelangenden Absatz auf.

Die erfindungsgemäße Hülse ist insbesondere auch in jenen Fällen verwendbar, wo zwischen Bolzengewinde – Durchmesser und Radbefestigungsbohrung ein unverhältnismäßig großer Durchmesserunterschied besteht. Die Hülse mit Einsatz bewirkt hier eine Zentrierung des Rades.

Um auch bei größeren Bolzen- und Hülsendurchmessern mit den bisher gebräuchlichen Montierhebeln arbeiten zu können, ist vorzugsweise die Hülse an ihrem freien Ende konisch ausgebildet, wobei der Rand in einem spitzen Winkel zur Hülsenachse eingezogen ist, nach innen abgerundet ist und einen verstärkten Wulst bildet, wodurch sich eine Material- und Gewichtseinsparung ergibt.

Zum Verhindern eines Abrutschens der Hülse vom Radbolzen, wodurch es zu Verletzungen des Monteurs bzw. zu Beschädigungen des Gewindes kommen kann, ist zweckmäßig die Hülse an ihrer Innenfläche mit einem reibungserhöhenden Belag oder mit einer reibungserhöhenden Oberfläche versehen, wobei ein vorzugsweise aus Kunststoff bestehender Einsatz an seiner Innen- und/oder Außenfläche reibungserhöhende Mittel, wie z.B. Riffelungen, Riefen od.dgl. aufweist.

Zweckmäßig sind die Sperrmittel des Montierhebels in Form eines von der Oberfläche des Gleichdickes vorspringenden Ansatzes vorgesehen, wobei die Seitenfläche des Ansatzes mit der Oberfläche des Gleichdickes eine Kerbe bildet.

Um ein einfaches Aufschieben des Rades durch Anheben des Montierhebels zu ermöglichen, ist das Gleichdick über einen Halsteil mit dem Montierhebel verbunden, wobei der Halsteil konisch ausgebildet ist und der kleinere Durchmesser dieses Halsteiles an das Gleichdick anschließt, wobei vorzugsweise die gegen das Gleichdick gerichtete Stirnfläche des Montierhebels ausgekehlt ist und diese Auskehlung in den Halsteil übergeht.

Gemäß einer bevorzugten Ausführungsform ist das Gleichdick in an sich bekannter Weise durch Torusflächen, die Hüllenflächen von Kreisen mit unterschiedlichen Radien, jedoch mit gleichen Mittelpunkten sind, begrenzt, wobei sich die Radien etwa wie 6,375 zu 10,625 verhalten.

Zur einfachen Montage von Rädern bei angetriebenen Fahrzeugachsen mit außenliegendem Planetengetriebe ist zweckmäßig der Montierhebel in einem Bereich nahe des konisch erweiterten Endes gekrümmt.

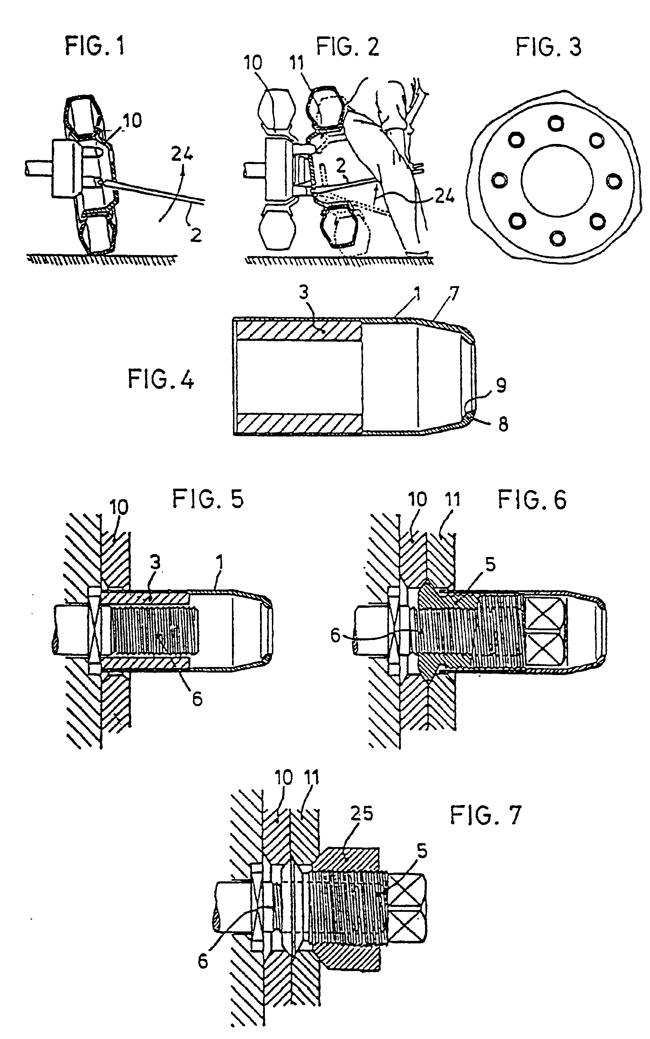

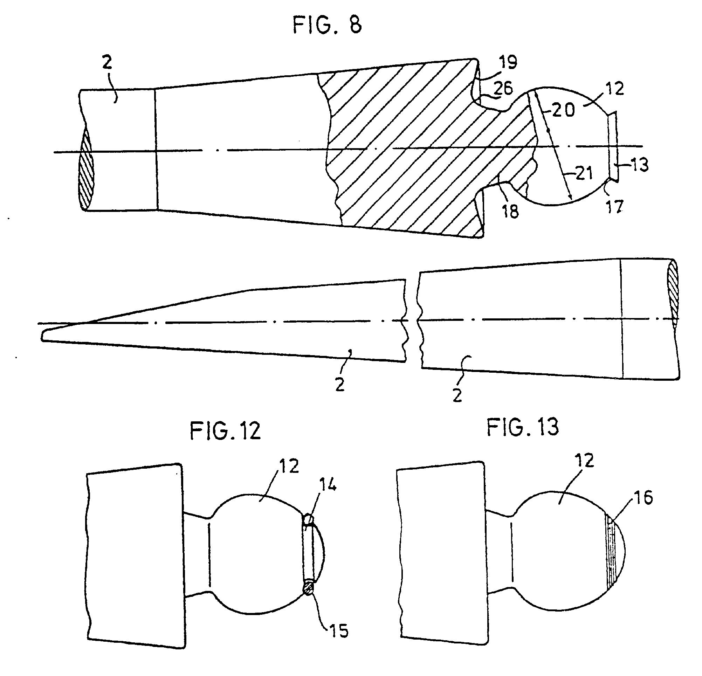

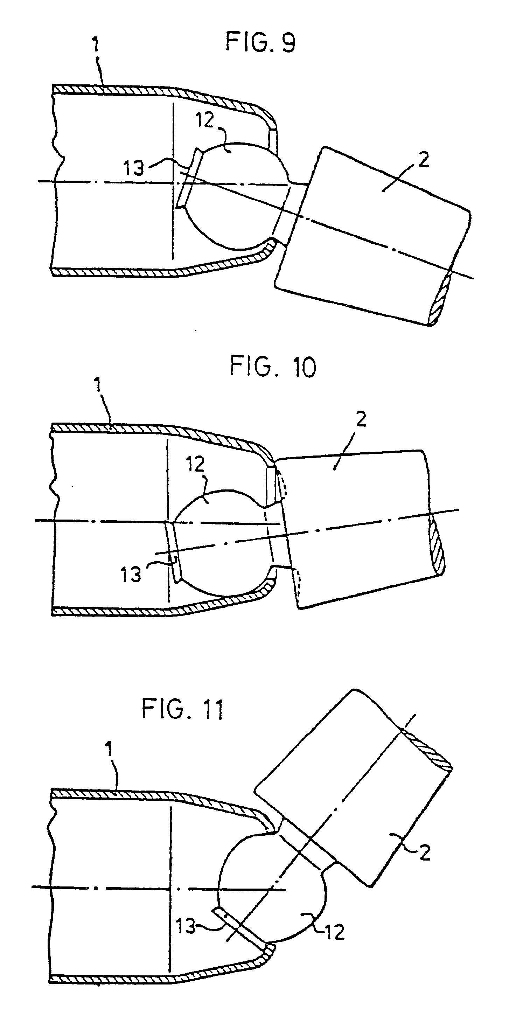

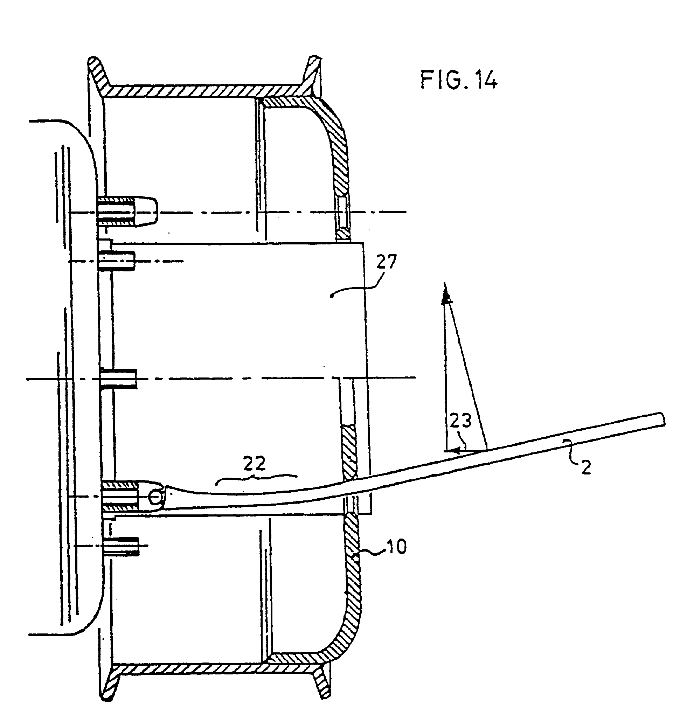

Die Erfindung ist nachfolgend anhand der Zeichnung näher erläutert, wobei die Fig. 1 bis 3 in schematischer Darstellung die Anordnung der Hülsen und den Montagevorgang zeigen. Fig. 4 zeigt einen Schnitt durch eine erfindungsgemäße Hülse. Die Fig. 5 bis 7 veranschaulichen in zu Fig. 4 analoger Darstellung die Vorgangsweise bei der Radmontage. Fig. 8 zeigt einen teilweise geschnittenen Montierhebel. Die Fig. 9 bis 11 veranschaulichen verschiedene Stellungen des Montierhebels in der Hülse während der Radmontage. Die Fig. 12 bis 14 zeigen jeweils in zu Fig. 8 analoger Darstellung verschiedene Ausführungsformen von Montierhebeln.

Die Fig. 1 und 2 geben eine Übersicht in mehr schematischer Darstellung und zeigen diese an sich bekannte Art des Montierens :

Die Montierhebel 2 werden durch die Radbefestigungsbohrungen des lose angelehnten Rades 10 eingeführt und durch einfaches Einstecken mit den auf die Radbefestigungsbolzen aufgesteckten Hülsen gelenkig verbunden. Durch Anheben der Montierhebel 2 in Pfeilrichtung 24 gleitet das Rad 10 über die Hülsen 1 in die entsprechende Gebrauchslage. Die Hülsen 1 verhindern dabei in bekannter Weise ein Beschädigen des Gewindes der Radbolzen. Des weiteren wird dabei auch eine Zentrierung der Radbohrung auf den Bolzen bewirkt. Die hierzu gebräuchlichste Anordnung der vorzugsweise drei Hülsen 1 ist aus Fig. 3 schematisch ersichtlich.

Die konstruktiven Einzelheiten und der erfindungsgemäße Vorgang bei der Radmontage gehen aus den Fig. 5 bis 7 hervor : Zur Montage eines einzelnen Rades oder eines inneren Rades 10 werden vorerst die Hülsen 1 mit Einsatz 3 wie aus Fig. 5 ersichtlich auf den Radbolzen 6 aufgesteckt und das Rad 10, wie bereits oben beschrieben, mittels Montierhebel 2 aufgeschoben. Anschließend wird das Rad mittels der Radmuttern bzw. mittels Innenmutter 5 fixiert, die Hülsen mit ihren Einsätzen 3 abgenommen und die nunmehr frei werdenden übrigen Radbolzen mit den restlichen Innenmuttern 5 versehen.

Auf die Außengewinde der Innenmuttern 5 wird jetzt unter Verwendung der Hülsen 1 ohne Einsätze in analoger Weise das äußere Rad 11 aufgeschoben. Mittels der Außenmuttern 25 wird das äußere Rad 11 nunmehr gleichfalls fixiert, anschließend werden die Hülsen 1 entfernt und an deren Stelle die verbleibenden Außenmuttern 25 festgeschraubt, wie dies aus Fig. 7 ersichtlich ist. Reihenfolge und Anzugs-Drehmoment beim Festziehen sowie ein periodisches Nachziehen der Muttern 5, 25 hat hierbei jeweils nach den Sicherheitsvorschriften des Fahrzeug- bzw. Radherstellers zu erfolgen.

Das Demontieren der Räder erfolgt einfach in umgekehrter Reihenfolge der oben angeführten Maßnahmen.

Ein Vorteil bei der Verwendung der erfindungsgemäßen Vorrichtung ist der absolute Gewindeschutz sämtlicher Radbefestigungsgewinde, welcher auch aus Gründen der Verkehrssicherheit angezeigt ist, da nur so das geforderte Anzugsmoment eingehalten werden bzw. das in der Praxis häufig vorkommende übermäßige Anziehen der Radmuttern vermieden werden kann.

Die Erfindung ist auf das dargestellte Ausführungsbeispiel nach Fig. 4 nicht beschränkt. Grundsätzlich umfaßt die Erfindung auch den Gedanken, eine derartige Montierhülse, sei es mit dem dargestellten konisch verjüngten Ansatz, sei es in der bisher gebräuchlichen zylindrischen Ausführungsform, mit einem lösbaren Einsatz zu versehen, wobei der Einsatz zur Anpassung an verschiedenste Radbolzendurchmesser dienen kann. Die Hülse 1 kann an ihrer Innenseite mit einem reibungserhöhenden Belag oder sonstigen reibungserhöhenden Maßnahmen versehen sein. Das gleiche gilt auch für die Innenseite und die Außenseite des Einsatzes 3.

Ein weiteres Merkmal der Erfindung ist die konische Ausbildung des Endes 7 der Hülse 1. Diese erlaubt es, auch bei größeren Bolzengewinde- und Hülsendurchmessern mit den bisher gebräuchlichen Montierhebeln zu arbeiten, woraus sich eine Material- und Gewichtseinsparung ergibt.

Der eingezogene Durchmesser des Randes 8 schließt in Arbeitsstellung an das Gleichdick 12 des Montierhebels 2 an. Gemäß einem weiteren Kennzeichen der Erfindung trägt das Gleichdick 12 einen Ansatz 13, der im wesentlichen senkrecht zur Längsachse des Montierhebels 2 steht. Die dem Montierhebel 2 zugewandte Seitenfläche 17 des Ansatzes 13 bildet eine Kante mit der vorderen Torusfläche des Gleichdickes 12.

Wie insbesondere Fig. 8 fernerhin erkennen läßt, ist die Stirnfläche 19 des Montierhebels 2 ausgekehlt, wobei die Auskehlung 26 in den konisch ausgebildeten Halsteil 18 übergeht, welcher seinerseits das Gleichdick 12 trägt.

Die Fig. 9 bis 11 veranschaulichen verschiedene Stellungen des Montierhebels 2 mit Bezug zur Hülse 1. Wie schon oben gesagt, sitzt die Hülse 1 während des Montiervorganges auf einem Radbolzen, der in den Fig. 9 bis 11 nicht dargestellt ist. Fig. 9 zeigt die Ausgangslage, die in etwa auch der Fig. 1 entspricht. Es wird dann der Hebel 2 in Richtung des Pfeiles 24 in Fig. 1 angehoben, so daß sich eine Stellung gemäß Fig. 10 ergibt, in der das Rad auf die Hülsen und somit über sämtliche Radbolzen aufgeschoben werden kann. Zur Unterstützung dieser Aufschiebebewegung ist es oft erforderlich, den Montierhebel 2 weiterhin anzuheben, so daß er auch in Stellungen kommt, die aus Fig. 11 zu ersehen sind. Bei der genannten weiteren Aufwärtsschwenkung des Montierhebels 2 gleitet der Rand 8 der Hülse 1 ungehindert an der Wand der Auskehlung 26 vorbei, wobei der Montagevorgang durch eine etwaige Verkantung zwischen Montierhebel 2 und Hülse 1 nicht behindert wird.

Bei den bisher bekannten Montierhebeln bestand in dieser Stellung (Fig. 11) die Gefahr, daß das Gleichdick 12 mit der Hülse 1 außer Eingriff gelangt. Es kann dann unter Umständen und insbesondere bei Hülsen mit konisch verjüngtem Ende 7 dazu kommen, daß das Rad, das noch nicht vollständig aufgeschoben ist, wieder abgleitet, so daß der Montiervorgang wiederholt werden muß.

Darüberhinaus besteht die Gefahr, daß ein abgleitendes Rad die montierende Person verletzt. Diese Gefahren sind durch den erfindungsgemäßen Ansatz vermieden. Wie die Fig. 11 deutlich zeigt, stützt sich in dieser obersten Schwenklage der Ansatz 13 formschlüssig bzw. kraftschlüssig am Wulst 9 der Hülse 1 ab. Der Montierhebel 2 kann nicht mehr weiter nach oben geschwenkt werden, und es ist ein Außereingriffkommen zwischen dem Gleichdick 12 und der Hülse 1 unmöglich gemacht.

Dies gilt in analoger Weise auch für die unterste Schwenkendlage des Montierhebels 2, wobei durch den Ansatz 13 verhindert wird, daß der Montierhebel 2 herunterfällt, sobald er von der montierenden Person losgelassen wird. Mit Bezug zu Fig. 8 sei noch gesagt, daß das Gleichdick 12 in an sich bekannter Weise durch Torusflächen, die Hüllenflächen von zwei Kreisen mit verschiedenen Radien, jedoch jeweils gemeinsamem Mittelpunkt sind, begrenzt ist, wobei sich die Radien 20, 21 so verhalten, wie 6,375 zu 10,625.

Der Ansatz 13 kann selbstverständlich auch in anderer Form als Sperrmittel ausgeführt sein, als dies in Fig. 8 dargestellt ist. Fig. 12 veranschaulicht diesbezüglich eine Ausführung, bei der diese Sperrmittel als Nut 14 vorgesehen sind, wobei in diese Nut unter Umständen auch ein Spreng- oder Federring 15 eingelegt sein kann. Nach Fig. 13 sind Riefen 16 oder auch erhabene Aufrauhungen angeordnet, die in gleichem Sinne als Sperrmittel wirken.

Die Erfindung ist auf die dargestellten Ausführungsbeispiele nicht beschränkt. Die Hülse 1 kann an ihrem verengten Rand 8 auch eine wulstartige Verstärkung haben, die der Stabilität dient und weiterhin einen unlösbaren Eingriff des Ansatzes 13 des Gleichdickes 12 in der äußersten Schräglage des Montierhebels 2 gewährleistet. Die Sperrmittel könnten auch durch Anordnung eines besonders rauhen Werkstoffes am Ende des Gleichdickes 12 gegeben sein.

Nach einem weiteren Merkmal der Erfindung ist der Schaft des Montierhebels 2 in einem Bereich 22 nahe des konisch erweiterten Endes gekrümmt. Dadurch ergibt sich bei angetriebenen Fahrzeugachsen mit außenliegendem Planetengetriebe eine Erleichterung des Montagevorganges. Dieses Detail ist aus Fig. 14 ersichtlich. Hier wird durch das Gehäuse 27 des Getriebekörpers ein wesentliches Anheben des Rades über die Mittellinie der Achse unmöglich gemacht. Aus der Krümmung und damit Schräglage des Montierhebels 2 resultiert jedoch in bekannter Weise auf der schiefen Ebene eine horizontale Kraftkomponente 23, die geeignet ist, das Aufgleiten des Rades 10 zu bewirken.

### Ansprüche

1. Vorrichtung zum Montieren von Scheibenrädern an Kraftfahrzeugen, mit mindestens einer über einen Radbolzen schiebbaren Hülse (1), an der ein Montierhebel (2) schwenkbar ansetzbar ist, wobei die Hülse (1) einem Einsatz (3) aufweist, dessen Außendurchmesser dem Innendurchmesser der Hülse (1) angepaßt ist und dessen Innendurchmesser dem Durchmesser des Radbolzens (6), auf den die Hülse (1) mit dem Einsatz (3) aufschiebbar ist, entspricht, und wobei der Montierhebel (2) ein Element (12) aufweist, welches ein Sperrmittel (13, 14, 15, 16) zum Verhindern eines Außereingriffkommens des Montierhebels (2) mit der Hülse (1) in jeder schrägen Endlage des Montierhebels trägt, dadurch gekennzeichnet, daß der Innendurchmesser der Hülse (1) im wesentlichen dem Durchmesser des Außengewindes einer Innenmutter (5), auf welche die Hülse (1) aufsteckbar ist, entspricht, daß der Einsatz (3) Lösbar ist, daß das Element ein Gleichdick (12) ist und daß Montierhebel (2) amfreien Ende der Hülse (1) ansetzbar ist.

2. Vorrichtung nach Anspruch 1, dadurch gekennzeichnet, daß die Hülse (1) innen einen mit dem lösbaren Einsatz (3) in Kontakt gelangenden Absatz aufweist.

3. Vorrichtung nach Anspruch 1 oder 2, dadurch gekennzeichnet, daß die Hülse (1) an ihrem freien Ende (7) konisch ausgebildet ist, wobei der Rand (8) in einem spitzen Winkel zur Hülsenachse eingezogen ist, nach innen abgerundet ist und einen verstärkten Wulst (9) bildet.

4. Vorrichtung nach einem der Ansprüche 1 bis 3, dadurch gekennzeichnet, daß die Hülse (1) an ihrer Innenfläche mit einem reibungserhöhenden Belag oder mit einer reibungserhöhenden Oberfläche versehen ist.

5. Vorrichtung nach einem der Ansprüche 1 bis 4, dadurch gekennzeichnet, daß der vorzugsweise aus Kunststoff bestehende Einsatz (3) an seiner Innen- und/oder Außenfläche reibungserhöhende Mittel. wie z.B. Riffelungen, Riefen od.dgl. aufweist.

6. Vorrichtung nach Anspruch 1, dadurch gekennzeichnet, daß die Sperrmittel des Montierhebels (2) in Form eines von der Oberfläche des Gleichdickes (12) vorspringenden Ansatzes (13) vorgesehen sind, wobei die Seitenfläche (17) des Ansatzes (13) mit der Oberfläche des Gleichdickes (12) eine Kerbe bildet.

7. Vorrichtung nach Anspruch 1 oder 6, dadurch gekennzeichnet, daß das Gleichdick (12) über einen Halsteil (18) mit dem Montierhebel (2) verbunden ist, wobei der Halsteil (18) konisch ausgebildet ist und der kleinere Durchmesser dieses Halsteiles an das Gleichdick (12) anschließt.

8. Vorrichtung nach Anspruch 7, dadurch gekennzeichnet, daß die gegen das Gleichdick (12) gerichtete Stirnfläche (19) des Montierhebels (2) ausgekehlt ist und diese Auskehlung in den Halsteil (18) übergeht.

9. Vorrichtung nach einem der Ansprüche 1, 7 oder 8, dadurch gekennzeichnet, daß das Gleichdick (12) in an sich bekannter Weise durch Torusflächen, die Hüllenflächen von Kreisen mit unterschiedlichen Radien, jedoch mit gleichen Mittelpunkten sind, begrenzt ist, wobei sich die Radien (20, 21) etwa wie 6,375 zu 10,625 verhalten.

10. Vorrichtung nach einem der Ansprüche 1 bis 9, dadurch gekennzeichnet, daß der Montierhebel (2) in einem Bereich (22) nahe des konisch erweiterten Endes gekrümmt ist.

### Claims

1. Apparatus for mounting disk wheels on motor vehicles, having at least one sleeve (1) slidable over a wheel bolt, to which sleeve a mounting lever (2) is pivotably attachable, the sleeve (1) having an insert (3), the outer diameter of which is adapted to the inner diameter of the sleeve (1) and the inner diameter of which corresponds to the diameter of the wheel bolt (6) onto which the sleeve (1) with the insert (3) is slidable, and wherein the mounting lever (2) has an element (12) which carries a locking means (13, 14, 15, 16) for preventing disengagement of the mounting lever (2) with the sleeve (1) in any inclined end position of the mounting lever, characterised in that the inner diameter of the sleeve (1) substantially corresponds to the diameter of the outer thread of an inner nut (5) onto which the sleeve (1) can be slipped, that the insert (3) is detachable, that the element is a constant diameter cam (12) and that the mounting lever (2) is adapted to engage at the free end of the sleeve (1).

2. Apparatus according to claim 1, characterised in that the sleeve (1) at its inner side has a shoulder (4) getting into contact with the detachable insert (3).

3. Apparatus according to claim 1 or 2, characterised in that the sleeve (1) is conically designed at its free end (7), the rim (8) being retracted at an acute angle to the sleeve axis, rounded towards inside and forming a thickened bead (9).

4. Apparatus according to one of claims 1 to 3, characterised in that the sleeve (1) is provided with a friction-increasing coating at its inner surface or with a friction-increasing surface.

5. Apparatus according to one of claims 1 to 4, characterised in that the insert (3) preferably made of plastics material is provided with friction-increasing means, such as e.g. ribbing, furrows or the like, at its inner and/or outer surface.

6. Apparatus according to claim 1, characterised in that the locking means of the mounting lever (2) are provided in the form of a shoulder (13) projecting from the surface of the constant diameter cam (12), wherein the side face (17) of the shoulder (13) forms a notch with the surface of the constant diameter cam (12).

7. Apparatus according to claim 1 or 6, characterised in that the constant diameter cam (12) is connected with the mounting lever (2) via a neck portion (18), the neck portion (18) being conically designed and the smaller diameter of said neck portion following upon the constant diameter cam (12).

8. Apparatus according to claim 7, characterised in that the front face (19) of the mounting lever (2) facing the constant diameter can (12) is grooved and that groove verges into the neck portion (18).

9. Apparatus according to one of claims 1, 7 or 8, characterised in that the constant diameter cam (12) is delimited in a manner known per se by torus faces, which are enveloping surfaces of circles having different radii, but the same centres, the ratio of the radii (20, 21) being approximately 6.375 to 10.625.

10. Apparatus according to one of claims 1 to 9, characterised in that the mounting lever (2) is curved in a region (22) near its conically expanded end.

**Revendications**

1. Dispositif pour monter des roues pleines sur des véhicules automobiles, avec au moins un manchon (1) déplaçable sur un boulon de roue et sur lequel peut être monté de façon pivotante un levier de montage (2), le manchon (1) présentant une pièce d'insertion (3) dont le diamètre externe est adapté au diamètre interne du manchon (1) et dont le diamètre interne correspond au diamètre du boulon de roue (6) sur lequel le manchon (1) est déplaçable avec la pièce d'insertion (3), et le levier de montage (2) présentant un élément (12) qui porte un moyen de blocage (13, 14, 15, 16) pour éviter un désengagement du levier de montage (2) et du manchon (1) en toute position terminale oblique du levier de montage, caractérisé en ce que le diamètre interne du manchon (1) correspond sensiblement au diamètre du filetage externe d'un écrou interne (5) sur lequel le manchon (1) peut être inséré, en ce que la pièce d'insertion (3) est amovible, en ce que l'élément est un orbiforme (12) et en ce que le levier de montage (2) peut être disposé à l'extrémité libre du manchon (1).

2. Dispositif selon la revendication 1, caractérisé en ce que le manchon (1) présente à l'intérieur une réduction qui vient en contact avec la pièce d'insertion amovible (3).

3. Dispositif selon la revendication 1 ou 2, caractérisé en ce que le manchon (1) est conique à son extrémité libre (7), le bord (8) étant rentré suivant un angle aigu avec l'axe du manchon, et étant arrondi vers l'intérieur en formant un renflement renforcé (9).

4. Dispositif selon l'une des revendications 1 à 3, caractérisé en ce que le manchon (1) est muni au niveau de sa surface interne d'un revêtement augmentant le frottement ou d'une surface augmentant le frottement.

5. Dispositif selon l'une des revendications 1 à 4, caractérisé en ce que la pièce d'insertion (3) qui consiste de préférence en matière plastique présente au niveau de sa surface interne et/ou externe des moyens augmentant le frottement comme par exemple des cannelures, des rainures ou analogues.

6. Dispositif selon la revendication 1, caractérisé en ce que les moyens de blocage du levier de montage (2) sont prévus sous forme d'un épaulement (13) en saillie depuis la surface de l'orbiforme (12), la surface latérale (17) de l'épaulement (13) formant une entaille avec la surface de l'orbiforme (12).

7. Dispositif selon la revendication 1 ou 6, caractérisé en ce que l'orbiforme (12) est relié au levier de montage (2) par l'intermédiaire d'une partie formant col (18), la partie formant col (18) étant conique et le plus petit diamètre de cette partie formant col se raccordant à l'orbiforme (12).

8. Dispositif selon la revendication 7, caractérisé en ce que la surface frontale (19) du levier de montage (2) qui est dirigée vers l'orbiforme (12) présente une gorge qui se prolonge par la partie formant col (18).

9. Dispositif selon l'une des revendications 1, 7 ou 8, caractérisé en ce que l'orbiforme (12) est limité de façon connue en soi par des surfaces toriques qui sont les surfaces enveloppantes de cercles de rayons différents mais de centres identiques, les rayons (20, 21) étant dans le rapport d'environ 6,375 à 10,625.

10. Dispositif selon l'une des revendications 1 à 9, caractérisé en ce que le levier de montage (2) est courbé dans un domaine (22) proche de l'extrémité évasée de façon conique.

FIG. 1

FIG. 2

FIG. 3

FIG. 4

FIG. 5

FIG. 6

FIG. 7

FIG. 8

FIG.12

FIG. 13

FIG. 9

FIG. 10

FIG. 11

FIG.14

27

22

23

2

10